Europäisches Patentamt

European Patent Office

Office européen des brevets

(11) Veröffentlichungsnummer: **0 348 544**
**A1**

## EUROPÄISCHE PATENTANMELDUNG

(21) Anmeldenummer: 88110474.9

(22) Anmeldetag: 30.06.88

(51) Int. Cl.⁴: **A01B 15/08 , A01B 3/02 , A01B 15/00**

(43) Veröffentlichungstag der Anmeldung:
03.01.90 Patentblatt 90/01

(84) Benannte Vertragsstaaten:
**AT BE CH DE ES FR GB GR LI LU NL SE**

(71) Anmelder: **NYIREGYHAZI MEZÖGAZDASAGI GEPGYARTO VALLALAT**
**Rákoczi u. 102**
**H-4401 Nyiregyháza(HU)**

(72) Erfinder: **Szabó, István**
**Komlósi u. 20/b**
**H-4000 Debrecen(HU)**

(74) Vertreter: **Kohlmann, Karl Friedrich, Dipl.-Ing.
et al**
**Hoffmann, Eitle & Partner Arabellastrasse 4
(Sternhaus)**
**D-8000 München 81(DE)**

(54) **Rollengangpflug.**

(57) Um in Kleinwirtschaften, Kleingärten, Folienzelten o.dgl. Bodenbearbeitungsoperationen universell und ggf. auch mittels menschlicher Kraft durchführen zu können, wird bei einem Rollengangpflug, der über ein am Pflugrumpf(1) befestigtes Pflugeisen (6), ein Pflugmesser (5) sowie über hinter diesen angeordneten, ·verdrehbar gelagerten Gleitsohlen-(34)-und Streichrollen (24,25) verfügt, das Pflugmesser (5) als ein von unten nach oben fortschreitend nach hinten geneigtes, sogenanntes "verborgenes" Pflugmesser (5) ausgebildet, dessen unteres Ende am vorderen Teil des Pflugeisens (6) angeschlossen ist, wobei der Grund bzw. der Kern der Streichrollen (24,25) und der Gleitrolle (34) aus Kunststoff bestehen.

Fig.1

# Rollengangpflug

Die Erfindung bezieht sich auf einen auch mittels menschlicher Kraft betätigbaren Rollengangpflug, der insbesondere zum Bebauen von Kleinwirtschaften und Kleingärten geeignet ist.

Es ist bekannt, dass auch die Produktion in Kleinwirtschaften und Kleingärten, sowie in Treibhäusern bzw. Folienzelten Bodenbearbeitungsoperationen erfordert, wie das Pflügen, das Tieflockern, das Jäten, der Rückenbau, das Furchenziehen zwecks Bewässerung, oder, zu anderen Zwecken, das Kartoffellegen und -rodern, oder des weiteren das Beckecken von Weinstöcken und Baumwurzeln mittels Erde gegen Frost und deren Freilegung im Frühling. Diese Operationen werden heute mittels Handwerkzeugen, zum Beispiel mittels Spaten, Hacke, und ähnlichem, ferner mit Hilfe von Gartentraktoren größerer Kapazität, traditionellen, mit Tieren geschleppten Gangpflügen und Hackpflügen durchgeführt. In der Mehrzahl der Treibhäuser, Folienzelte können die oben erwähnten Operationen zwischen den Bäumen niedriger Krone und zwischen Weinstöcken und Obstbäumen wegen des geringen Reihenabstandes, weiterhin bei Mais, Mohrenhirse, Sonnenblumen und anderen Reihenpflanzen mit Hilfe von Gartentraktoren oder von Tieren geschleppten Mitteln infolge des engen Raumes nicht durchgeführt werden. Das Pflügen ersetzende Grabungen, der Rückenbau, das Furchenziehen, das Kartoffellegen und -rodern, das Bedecken von Weinstöcken und Baumwurzeln mittels Erde gegen Frost und deren Freilegen im Frühling können deshalb nur mit Hilfe von Handwerkzeugen in schwerer Handarbeit erfolgen.

Beim Bedecken und Öffnen von Weinstöcken müssen die Werkzeuge nahe an die Weinstöcke herangeführt werden. Diese Arbeiten können daher mit Gartentraktoren oder mit Tieren geschleppten Mitteln ohne Beschädigung der Pflanzen nicht durchgeführt werden. Darüber hinaus ist die Viehhaltung kostspielig und zum Schleppen mit Tieren sind ordnungsgemäß zwei Personen nötig (eine Person für das Bearbeitungswerkzeug und die zweite Person zum Führen des Schlepptieres).

Der Betrieb der Gartentraktoren ist infolge des Benzin-und Ölverbrauches ebenfalls kostspielig. Auch wollen sich die Men schen im Garten von der verschmutzten Luft und von den Geräuschen der Stadt erholen. Gartentraktoren dagegen verursachen erhebliche, - zum Teil krebserregende - Luftverschmutzung und erzeugen Geräusche, wogegen sich Umweltschützer wenden.

Die zum Pflügen heute verwendeten Gangpflüge bestehen aus dem Pflugkopf und aus dem am Pflugrumpf anmontierten Pflugeisen, welches den Bodenbalken horizontal ausreißt. Weiterhin bestehen sie aus dem vom Pflugrahmen in den Boden ragenden Pflugmesser, das den Bodenbalken vertikal ausreißt, sowie aus dem am Pflugrumpf anmontierten Streichblech mit Stahlfläche, welches den ausgerissenen Bodenbalken umdreht und in geringem Maße zerkleinert.

Das durch den Boden auf einer Zwangsbahn bewegende Pflugeisen stützt sich an der Furchenwand mit großer Reibung ab, wodurch eine große Ziehkraft erforderlich ist. Die vom Pflugrahmen in den Boden ragenden und den Boden vertikal schneidenden Pflugmesser können darüber hinaus von den an der Bodenoberfläche gebliebenen Ranken von Kürbissen, Gurken, Kartoffeln, von Stengeln von Mais, Sonnenblumen, Tabak und von anderen Pflanzenresten verstopft werden, da diese sich zwischen dem Pflugrahmen und den Pflugmessern festsetzen.

Aus der HU-PS 145.669 ist ein Rollenpflug bekannt, bei dem das Streichbelch durch am Zylindermantel anmontierte, rotierende Bearbeitungskörper mit selbstreinigender verschleissbeständiger Oberfläche: Streichrollen, und die gleitende-reibende Gleitsohle aus Metallblech durch Gleitsohlenrollen mit selbstreinigender verschleissbeständiger Oberfläche ersetzt sind. Die mit diesen rotierenden Bearbeitungskörpern versehenen Pflugköpfe erfordern den praktischen Erfahrungen nach eine um 25-35 % geringere Ziehkraft als die mit diesen gleichwertigen Pflüge mit Streichblech-Gleitsohle, bei gleicher Pflugbreite, -tiefe und Bodenqualität.

Der gemeinsame Nachteil der oben beschriebenen Pflüge besteht darin, dass das sich vor dem Pflugkopf bewegende Pflugmesser oder Scheibenpflugmesser durch einen Arm am Pflugrahmen befestigt ist. Infolge dessen können beim Pflügen von mit Kürbis-, Gurken-, Kartoffelranken, Maisstengeln und anderen Pflanzenresten bedecktem Boden durch Ansammlung dieser Pflanzenreste zwischen dem Befestigungsarm des Pflugmessers und dem Pflugrahmen die Verstopfungen des Pfluges und damit ein Betriebsstillstand verursacht werden. Die Entfernung der Verstopfungen bedeutet schwere Arbeit, Zeit- und Leistungsverlust. Aus diesem Grund montieren die Traktorfahrer die Pflugmesser vom Pflug ab, was die nachteilige Folge hat, dass die vertikale Wand der Furche durch den vorderen Rand des Streichbleches, und damit reißend, brechend, zerkleinernd ausgebildet wird, wodurch sich der Bedarf an Ziehkraft und damit der Treibstoffverbrauch bedeutend erhöhen, und ein schlechtes Arbeitsergebnis erreicht wird.

Ein anderer Nachteil der heute bekannten Gangpflüge besteht darin, daß sie nicht nur mit ihrem Streichblech und der Gleitsohle im Boden großen Widerstand ausüben, sondern daß die ausgerissene Furche und das Bodenprofil mit ihrem großen Gewicht den Pflugkopf belasten und den Pflugkörper an den Boden derFurche drückend mit dem Pflugboden mit großem Widerstand am Furchenboden gleiten. Dadurch wird die Zugkraft weiter erhöht und darüber hinaus am Furchenboden auf Grund der Verdichtung durch den Pflugboden Schaden verursacht.

Aufgabe der Erfindung ist, die aufgezählten Nachteile und Mängel zu beseitigen, und einen Gangpflug für Kleinwirtschaften zu schaffen, der auch durch menschliche Kraft betätigt werden kann, eine geringe Zugkraft benötigt, verstopfungsfrei arbeitet und über die Lösung der aufgezählten Bodenbearbeitungsprobleme hinaus auch zur Durchführung von Hacken geeignet und zugleich einfach und nicht kostspielig ausgebildet ist.

Die Erfindung geht von einem bekannten Rollengangpflug aus, der über ein am Pflugrumpf befestigtes Pflugeisen, über eine Gleitsohlenrolle, über ein am Pflugrahmen befestigtes Pflugmesser, und über in Schlepprichtung hinter dem Pflugmesser am Pflugrahmen befestigte Streichrollen verfügt. Dieser Gangpflug wurde erfindungsgemäß derart weiterentwickelt, daß das Pflugmesser als ein von unten, von der Nase des Pflugeisens nach oben bis zur Höhe des Pflugkopfes fortschreitend sich nach hinten neigendes, am Pflugrumpf befestigtes "verborgenes" Pflugmesser ausgebildet ist. Das erfindungsgemäße sogenannte "verborgene" Pflugmesser ragt nicht von Pflugrahmen in den Boden, sondern ist aus dem Boden, von der Nase des Pflugeisens ausgehend, mit der Kante nach hinten neigend bis zur Höhe des Pflugrumpfes aus dem Boden hinausragend am Pflugrumpf befestigt. Damit ist die Verstopfungsgefahr des Pfluges beseitigt, beziehungsweise auf das Minimum herabgesetzt.

Das erfindungsgemässe verborgene Pflugmesser ist aus dem, am Pflugrumpf mittels Schrauben befestigten Leitblech ausgebildet. Auf diese Weise ist das Pflugmesser je nach Bedarf einfach und schnell auszutauschen oder zwecks Schärfung abzumontieren.

Die Gleitsohlenrolle ist in ihrer vertikalen Lage verstellbar ausgebildet. Am Pflugrahmen vorne ist ein in Anstützbreite, Seitenrichtung und vertikaler Richtung verstellbar funktionierendes, die Tiefe regelndes Laufrad aus Kunststoff angeordnet, wodurch erreicht wird, daß der Rollenpflug nicht auf mit traditionellen Pflügen vergleichbare Weise am Furchenboden mit grosser Kraft reibend entlanggleitet, sondern hinten an der Gleitsohlenrolle und vorne an dem die Tiefe regelnden Rad rollt, was eine weitere Verminderung der Zugkraft und auch die Beseitigung der durch die heute verwendeten Gangpflüge verursachten Pflugsohlenkrankheit ergibt. Darüber hinaus kann der Einfall- und Betriebskantenwinkel des verborgenen Pflugmessers und des Pflugeisens mit Hilfe der Gleitsohlenrolle und den die Tiefe regelnden Rollen den jeweiligen Bodenverhältnissen entsprechend beliebig eingestellt werden, so kann der Energiebedarf des verborgenen Pflugmessers und Pflugeisens in einer, das Optimum annähernden Lage gehalten werden.

Die Gewichtskiste ist am Pflugrahmen derart angeordnet, dass sie in Seitenrichtung bewegt und in der verschobenen Lage befestigt werden kann, und zwar im Interesse der optimalen Annäherung an Weinstöcke und andere Pflanzenreihen.

Der Grund bzw. Kern der Streichrollen und der Gleitsohlenrolle ist zweckmässig ein korrosionbeständiger, leichter und nicht kostspieliger, keine Bearbeitung beanspruchender harter PVC-Stoff oder ein anderer entsprechender Kunststoff. Die Oberfläche dieser Kunststoff-Rollen ist zweckmässig ein selbstreinigender, verschleissbeständiger, mikroporöser Schwammgummi oder ein anderer Kunststoff mit den gleichen Eigenschaften. Die Streichrollen sind im Vergleich zueinander derart angeordnet, dass sie anstatt des Streichbleches eine rotierende gedrehte Streichfläche bildend den Bodenbalken vollständig umdrehen und zerkleinern.

Die erfindungsgemässe Lösung wird nachstehend anhand einiger Ausführungsbeispiele, mit Hilfe der beiliegenden Zeichnungen näher erläutert. Es zeigt

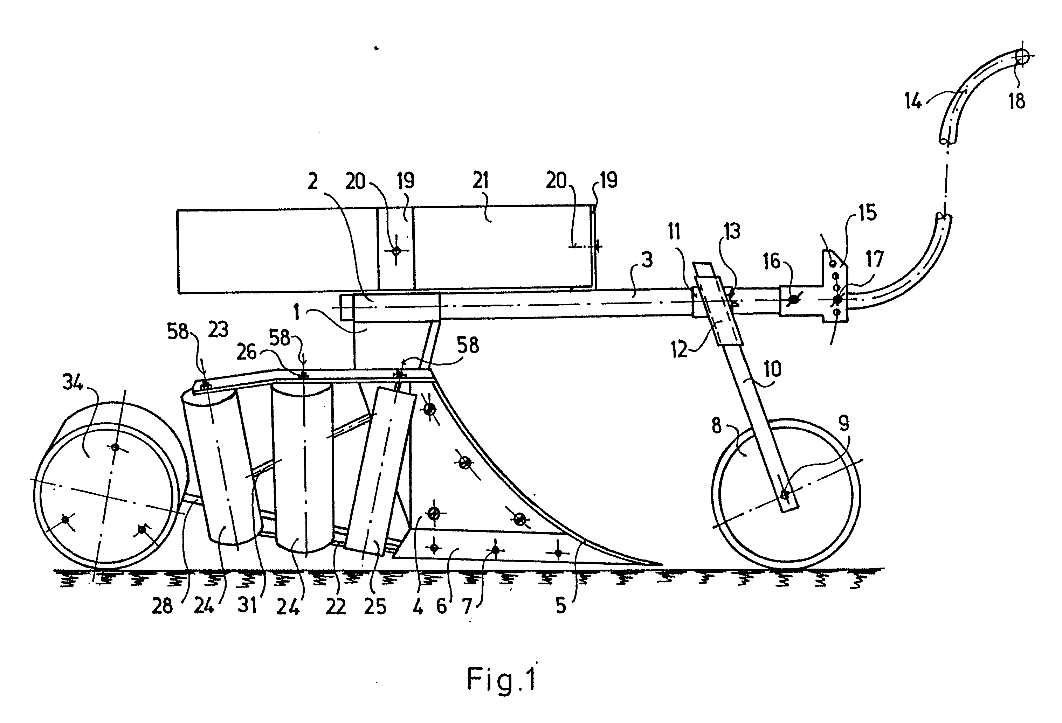

Fig. 1 - die rechtsseitige Ansicht einer beispielsweisen Ausführungsform des erfindungsgemässen Gangpfluges,

Fig. 2 - die linksseitige Ansicht der Ausführungsform nach Fig. 1,

Fig. 3 - die Anordnung der Gewichtskiste und des die Tiefe regelnden Rades am Rahmen des erfindungsgemässen Gangpfluges, weiterhin ihre Verstellbarkeit in Seitenrichtung und Befestigung der verstellten Lage,

Fig. 4 - eine beispielsweise Ausführungsform der Gleitsohlenrolle,

Fig. 5 - eine beispielsweise Ausführungsform der Streichrolle.

Wie es aus den Figuren ersichtlich ist, verfügt der erfindungsgemässe, auch mit menschlicher Kraft betätigbare Rollengangpflug über einen aus dünnwandigem Stahlrohr ausgebildeten Rahmen 3, an dem ein aus zwei Metallplatten mittels Schweissen oder Nieten gebündeltes Pflugrumpfblech 1, und am rohrartig ausgebildeten Teil 2 des oberen Endes des Pflugrumpfbleches 1 der Rahmen 3 beispielsweise mittels Schweissen befestigt ist. Am Pflugrumpfblech 1 ist ein mit horizontalen Schneidkanten versehenes Pflugeisen 6 mittels Schrauben 7, während am rechtsseitigen Pflugrumpfblech 1 ein Leitblech 4 ebenfalls mittels Schrauben 35 und ein aus dem Leitblech 4 ausgebildetes verborgenes Pflugmesser 5 lösbar befestigt.

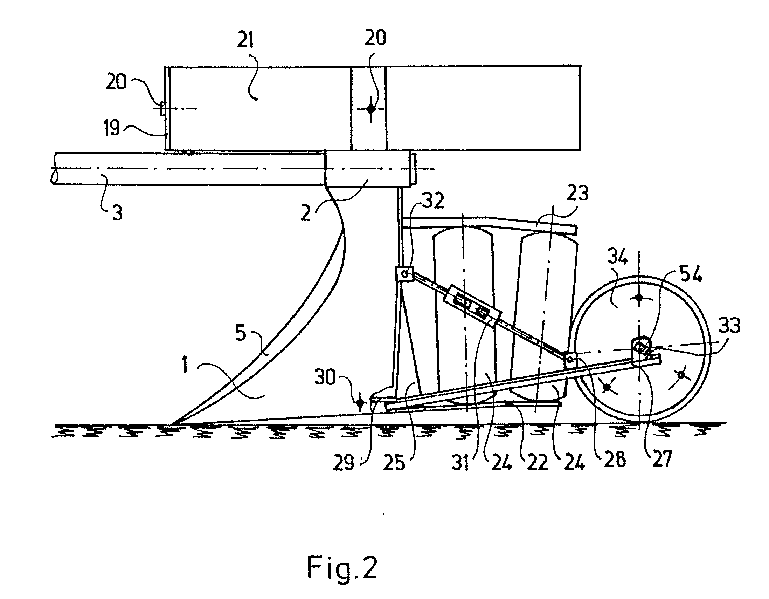

Erfindungsgemäss ist das in der Arbeitslage im Boden bis zur nötigen Tiefe arbeitende verborgene Pflugmesser 5 als ein von der Nase des Pflugeisens 6 nach oben fortschreitend, nach hinten geneigtes vertikales Schneidelement ausgebildet. Die Schneidkante des verborgenen Pflugmessers 5 ist in diesem Fall leicht gebogen ausgebildet (siehe Fig. 2). Die Schneidkante des verborgenen Pflugmessers 5 überlappt das Pflugrumpfblech 1 so, dass die ausgebildete Furchenwand sich mit dem Pflugrumpfblech 1 nicht berührt, d.h. nicht reibt (siehe Fig. 2). Das aus dem oberen Teil des aus einer dünnen Stahlplatte gefertigten Leitbleches 4 ausgebildete verborgene Pflugmesser 5 ist anhand seiner verborgenen Anordnung und Neigung nach hinten frei von Verstopfungsgefahr, und gewährleistet zugleich für den Pflugkörper ein gutes Eindringen und Einziehen in den Boden.

Hinter dem Pflugeisen 6 und dem verborgenen Pflugmesser 5, weiterhin dem Leitblech 4 sind an den erwähnten Bauteilen angeschlossene Streichrollen 24 and 25 in einer verdrehbaren Anordnung mit Rotationsflächen gedrehter Linie befestigt. Die Streichrollen 24 und 25 sind mit den Enden ihrer Achse 58 mittels einer Mutter 26 an den die untere Streichrolle 22 und die oberen Streichrolle 23 tragenden Konsolen befestigt.

Die Länge der Streichrollen 24 und 25 ist gleich. Der Durchmesser der zwei Streichrollen 24 ist ebenfalls gleich, jedoch beträgt zwecks besserer Anordnung der Durchmesser der Streichrolle 25 2.3 vom Durchmesser der Streichrolle 24, so daß der Kunststoffrohrgrund jeder Streichrolle hinsichtlich Länge und Durchmesser gleich ist. Infolge des an diesen Bauteilen befindlichen selbstreinigenden, verschleißbeständigen, zum Beispiel aus Schwammgummi- oder Polyäthylenstoff bestehenden Überzuges sind die Rollen hinsichtlich ihres Durchmesers von verschiedener Dicke.

Die Streichrollen 24 und 25 sind also derart angeordnet, daß sie zum Zwecke des guten Drehens, Zerkleinerns und Vermischens des ausgeschnittenen Bodenbalkens eine entsprechende gedrehte Oberfläche gewährleisten.

Die selbstreinigende, verschleissbeständige Oberfläche der Gleitsohlenrolle 34 ist aus dem gleichen Material gefertict wie die der Streichrollen. Die Gleitsohlenrolle 34 ist an den am Pflugrumpfblech 1 gelenkartig angeschlossenen Gleitsohlenrollen-Halteschäften 27 und 28 an der Achse 45 verdrehbar mittels einer Mutter 54 befestigt.

Die vertikal gerichtete Lage des Pflugrumpfbleches 1 und der Gleitsohlenrolle 34 zum Halteschaft 27 und 28 kann mittels einem rechtsgängigen und linksgängigen Schraubenspindelschloss 31 verstellt werden, mit dem die Winkellage des verborgenen Pflugmessers 5 und damit des Pflugeisens 6 zur Schlepprichtung geregelt werden kann. Dadurch kann das Eindringen, Einziehen des Pfluges in den Boden erhöht bzw. vermindert werden, also der Winkel der Schneidkante des verborgenen Pflugmessers 5 und des Pflugeisens 6 kann in Abhängigkeit des Zustandes und der Qualität des zu bearbeitenden Bodens auf einen das Optimale annähernde Wert eingestellt werden.

Am vorderen Ende des Pflugrahmens 3 ist eine die Schlepphöhe regelnde Gabel 15 angeordnet, und mittels einer im hinteren Teil der Gabel 15 angeordneten Befestigungsschraube 16 ist eine Zugstange 14 befestigt. Die Regelung der Schlepphöhe erfolgt durch eine in der entsprechenden Bohrung der Gabel 15 eingelegte Verstellschraube 17. Das Erfassen der Zugstange 14 ist durch einen im Befestigungsbügel 18 angeordneten Griff sichergestellt.

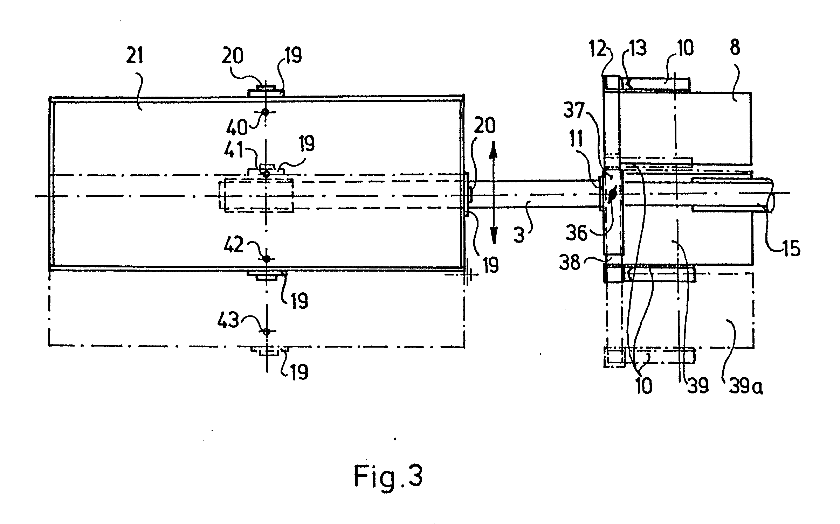

An einer am Pflugrahmen 3 befestigten Viereckplatte 11 ist ein Viereckhalter 37 angeschweisst, im dem ein in jeder Richtung verschiebbarer Viereckquerhalter 38 angeordnet ist, der der nötigen Lage entsprechend mittels einer im Viereckhalter 37 angeordneten Ringschraube 36 befestigt werden kann. An zwei Enden des Viereckquerhalters 38 ist ein mit Befestigungsringschraube 13 versehener Viereckhalterbügel 12 angeschweisst, in dem in vertikaler Richtung verstellbar und mit der Ringschraube 13 in der nötigen Lage befestigbar die Achse 10 des die Tiefe regelnden Rades angeordnet ist, an der die zwei vorteilhaft aus Kunststoff gefertigten, die Tiefe regelnden Räder 8 angeordnet sind. Die zwei, die Tiefe regelnden Räder 8 sind am Pflugrahmen 3 in Querrichtung im Viereckhalter 37 mittels dem Viereckquerhalter 38 der Arbeitsstabilität des Rollengangpfluges entsprechend verstellbar und in dieser Lage mittels der Ringschraube 36 befestigbar. Die zwei, die Tiefe regelnden Räder 8 können in vertikaler Richtung mit Hilfe der, die Tiefe regelnden Radwelle 10 im Bügel 12 nach oben und unten verschiebbar verstellt und im Bügel 12 in der der nötigen Tiefe der Höhe entsprechenden Lage mittels einer Ringschraube 13 befestigt werden. Der Halteschaft der zwei, die Tiefe regelnden Räder 8 kann aus dem Bügel herausgenommen werden. Die zwei, die Tiefe regelnden Räder 8 können entweder einander gegenüber oder aber mit dem Rücken aneinander angeordnet werden, falls die Stabilität des Betriebes des Pfluges weiter erhöht werden soll. Die Lage der zwei, die Tiefe regelnden Räder 8 kann also zur Befriedigung jeden Bedarfes variiert werden (siehe Fig. 3).

Wenn die Gewichtskiste 21 beispielsweise beim Bedecken oder Öffnen von Weinstockreihen in Seitenrichtung verstellt werden soll, damit sie nicht an die Reihen anstößt, können die im an dem Pflugrahmen 3 befestigten Haltebügel 19 befindliche Befestigungsschraube 20, sowie die am Pflugrahmen 3 mittels einer Befestigungsschraube 41 befestigten Bügel 19 und die darin befindlichen Befestigungsschrauben 20, 40, 41, 42 in die am vorderen Ende und am Boden der Gewichtskiste 21 ausgebildeten Bohrungen umgesetzt werden.

Das einwandfreie Eindringen des Pfluges in den Boden und dessen Halten in gleichmässiger Tiefe im Boden kann dadurch gewährleistet werden, dass in der Gewichtskiste 21 Erde entsprechender Menge gleichmässig angeordnet ist (siehe Fig. 3).

Mit der vertikalen Einstellung der zwei, die Tiefe regelnden Räder 8 und der Gleitsohlenrolle 34 kann also die entsprechende Bearbeitungstiefe des Rollengangpfluges geregelt werden.

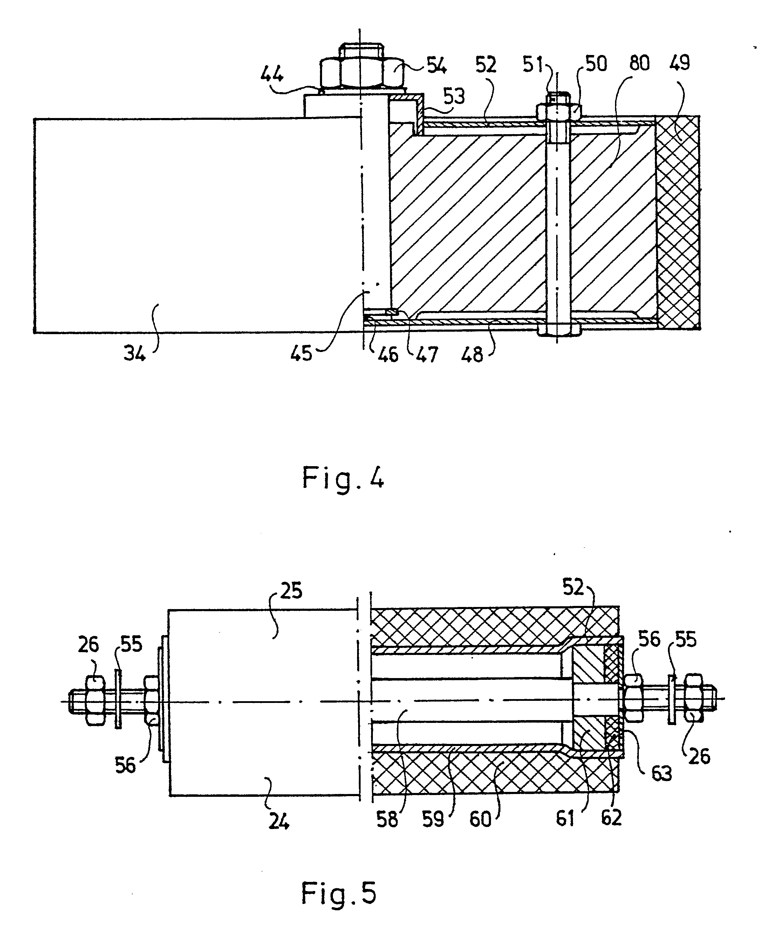

Die Streichrollen 24 und 25 sind beispielsweise auf einem Kunststoffrohr 59 derart aufgebaut, dass in den zwei Enden des Kunststoffrohres 59 ein leicht auszubildendes Lagernest 57 gefertigt ist, in dem ein beispielsweise aus Polyamid, Metamid oder anderem Kunststoff oder pulvermetallurgischem Stoff gefertigtes Lager 61 angeordnet ist, welches mittels einem Filz- oder anderem Entstaubungsring 62 und einer Platte 63 derart geschlossen ist, dass diese Platte 63 mittels einer an den Enden einer durch das Kunststoffrohr 59 und den an dessen zwei Enden angeordneten Lagern, den Entstaubungsring 62 und die diesen abdrückende Platte 63 hindurchgehenden Achse 58 angeordneten Mutter 56 befestigt ist. Danach ist das Kunststoffrohr 58 mit einer seinem Durchschnitt und seiner Länge entsprechend vorgefertigten selbstreinigenden, verschleissbeständigen Schicht 60 bedeckt. Die kompletten Streichrollen sind mit den Enden ihrer Achse 58 in die einander gegenüber liegenden Bohrungen der die Streichrolle tragenden unteren Konsole und der die Streichrolle tragenden oberen Konsole 23 eingesetzt und an den Enden der Achse 58 mit einer Unterlage 55 und einer Mutter 26 an diesen Konsolen befestigt (siehe Fig. 5).

Die Gleitsohlenrolle 34 ist beispielsweise ebenfalls auf einen hohlartigen beziehungsweise dichten, radförmigen Kunststoff aufgebaut. Die runde Metall- oder Kunststoffplatte 46 ist an vier durch den Radkörper 80 hindurchgehenden, in gleichmässiger Verteilung angeordneten Schrauben 51 mittels Muttern 50 befestigt. Die an dem am unteren Ende der Welle 45 ausgebildeten Bolzen angeordnete Metallunterlage 47 ist mittels einem in der am unteren Endbolzen der Achse ausgebildeten Nut einsetzbaren Klemmring oder einem in der durch dieses Achsenende hindurchlaufenden Bohrung 46 angeordneten Splintbolzen zwecks Verhinderung der Bewegung der Achse 45 aus dem Kunststoffrad 80 befestigt. An der oberen Schliessplatte 52 der Gleitsohlenrolle 34 anschliessend ist eine Staubkappe 53 zwecks Entstäubung angeordnet. Zwischen der Staubkappe 53 und der am Achsenende 45 angeordneten Schraubenmutter 54 ist eine die Gleitsohlenrolle 34 und die am Halteschaft 27 und 28 befestigte Gleitsohlenrolle tragende Platte 33 befestigt. Zwischen der unteren Schliessplatte 48 und der oberen Schliessplatte 52 der Gleitsohlenrolle 34 ist die flexible, selbstreinigende, verschleissbeständige Sohle 42 aus mikroporösem Gummi oder Poliäthylen der Gleitsohlenrolle 34 befestigt.

Die vertikal gerichtete Lage 27 und 28 des Pflugrumpfbleches 1 und der Gleitsohlenrolle 34 zum Halteschaft kann mit einem linksgängigen und rechtsgängigen Schraubenspindelschloss 31 verstellt werden, mit dem die Winkellage des verborgenen Pflugmessers 5 und damit des Pflugeisens 6 zur Schlepprichtung geregelt werden kann. Dadurch kann das Eindringen, Einziehen des Pfluges in den Boden erhöht beziehungsweise vermindert werden, also der Winkel der Schneidkante des verborgenen Pflugmessers 5 und des Pflugeisens 6 kann in Funktion des Zustandes und der Qualität des zu bearbeitenden Bodens auf einen an das Optimale angenäherten Wert eingestellt werden.

Dadurch, dass anstatt des Streichbleches bekannte Streichrollen bei dem erfindungsgemässen Rollengangpflug verwendet werden, kann eine mindestens 35 %-ige Ersparung an Zugkraft im Vergleich zu ähnlichen Pflügen mit Streichblech erreicht werden. Während der Pflug - oder anderer Operationen bewegt sich der erfindungsgemäße Rollengangpflug auf den die Tiefe regelnden Rädern 8 und auf der Gleitsohlenrolle 34 rollend fort und gleitet weder auf dem Pflugeisen noch auf der Sohle des Rollengangpfluges. Dadurch wird die Schleppenergie weiter vermindert. Darüber hinaus wird mit dem erfindungsgemässen verborgenen Pflugmesser 5 nicht nur die Verstopfungsgefahr und dadurch die Stillstandgefahr beseitigt, sondern auch die Arbeitskapazität und Arbeitsqualität erhöht.

Nach den mit dem erfindungsgemässen, auch mittels menschlicher Kraft betätigbaren Rollengangpflug erarbeiteten Versuchsergebnissen kann beispielsweise im Falle von Böden lockerer und mitteldichter Konstruktion (spezifischer Bodenwiderstand 20-40 kp/dm²) auch mittels Handschleppen ein gutes Ergebnis erreicht werden.

Der erfindungsgemässe Rollengangpflug ist von kleinem Volumen, sein Gesamtgewicht beträgt max. 10 kg, weiterhin ist seine konstruktive Ausbildung ausserordentlich einfach und nicht kostspielig. Mit der Verwendung des erfindungsgemässen Rollengangpfluges können die in den Kleinwirtschaften, Kleingärten und Folienzelten durchzuführenden verschiedenen Bearbeitungsoperationen universal durchgeführt werden, sogar unter Bäumen mit niedriger Krone oder zwischen engen Weinstockreihen oder anderen Pflanzenreihen. Der erfindungsgemässe Rollengang pflug kann anhand seines geringen Gewichtes und Volumens mit jedem Transportmittel auf leichte Weise geliefert werden, und ist - unabhängig davon, dass der Rollengangpflug auch mittels menschlicher Kraft betätigbar ist - auch dazu geeignet, mittels Gart entraktor oder einem Pferd geschleppt zu werden.

## Ansprüche

1. Rollengangpflug, insbesondere zur Bodenbearbeitung in Kleinwirtschaften, der über ein am Pflugrumpf befestigtes Pflugeisen, ein Pflugmesser, sowie über hinter diesen angeordnete, verdrehbar gelagerte Gleitsohlen- und Streichrollen verfügt, **dadurch gekennzeichnet,** dass das Pflugmesser als ein von unten nach oben fortschreitend nach hinten neigendes verborgenes Pflugmesser /5/ ausgebildet ist, dessen unteres Ende am vorderen Teil des Pflugeisens /6/ angeschlossen ist, und dass der Grund der Streichrollen und der Gleitsohlenrolle aus Kunststoff ist.

2. Rollengangpflug nach Anspruch 1, **dadurch gekennzeichnet,** dass die relative Winkellage des verborgenen Pflugmessers /5/ zur Schlepprichtung durch eine Regeleinheit, vorteilhaft eine Schraubenspindel-Verstelleinheit /31/ geregelt ist.

3. Rollengangpflug nach Ansprüche 1 oder 2, **dadurch gekennzeichnet,** dass die Schneidkante des verborgenen Pflugmessers /5/ leicht gebogen ausgebildet ist.

4. Rollengangpflug nach einem der Ansprüche 1 bis 3, **dadurch gekennzeichnet,** dass der Grund der Streichrollen /24, 25/ und der Gleitsohlenrolle /34/ ein harter flexibler Kunststoff ist, daß zumin dest die Rollenoberflächen aus selbstreinigendem und verschleissbeständigem Stoff ausgebildet sind, und daß die Streichrollen /24, 25/ für den zu zerkleinernden und drehenden Bodenbalken eine Schraubenfläche bildend angeordnet sind.

5. Rollengangpflug nach einem der Ansprüche 1 bis 4, **dadurch gekennzeichnet,** dass das verborgene Pflugmesser /5/ an dem am Pflugrahmen (3) befestigten Pflugrumpfblech /1/ mittels Schrauben /35/ befestigt ist.

Fig.1

EP 0 348 544 A1

Fig.2

Fig.3

EP 0 348 544 A1

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | BE-A- 562 724 (SZABO) * Seite 5, Absatz 3; Figur 1 * & HU-A-145 669 (Kat. D) | 1 | A 01 B 15/08 A 01 B 3/02 A 01 B 15/00 |
| A | | 3,4 | |
| Y | US-A-3 126 969 (SEWELL) * Spalte 1, Zeilen 69-71; Spalte 2, Zeilen 1-10; Figuren 1,3 * | 1 | |
| A | | 3,5 | |
| A | FR-A-1 362 702 (CHIABERGE) * Seite 1, rechte Spalte, Absatz 2; Figuren 1,3,4 * | 1,4 | |
| A | FR-A-1 068 316 (CASTERAN) * Zusammenfassung * | 2 | |
| A | FR-A- 347 919 (RENARD) * Insgesamt * | 2 | |
| A | US-A-1 690 238 (MORGAN) * Insgesamt * | 2 | |

**RECHERCHIERTE SACHGEBIETE (Int. Cl.4)**

A 01 B

Der vorliegende Recherchenbericht wurde für alle Patentansprüche erstellt

| Recherchenort | Abschlußdatum der Recherche | Prüfer |
|---|---|---|
| DEN HAAG | 01-02-1989 | CRAB E.A.C. |